# EUROPÄISCHE PATENTANMELDUNG

(11) **EP 0 954 141 A2**
(43) Veröffentlichungstag der Anmeldung: **03.11.1999**
(21) Anmeldenummer: 99440051.3
(22) Anmeldetag: 12.03.1999
(51) Int. Cl.: H04L 12/64, H04Q 11/04

(54) **Rechnerknoten, Kommunikations-Applikationen und Verfahren zum Transfer eines Datensatzes**

(30) Priorität: 30.04.1998 DE 19819292
(71) Anmelder: ALCATEL, 75008 Paris (FR)
(72) Erfinder: Gruber, Wolfgang, 71706 Markgröningen (DE)
(74) Vertreter: Zinsinger, Norbert

(57) **Zusammenfassung**

Die Erfindung betrifft ein Verfahren zum Transfer eines Datensatzes von einem ersten Rechnerknoten (CN1) zu einem zweiten Rechnerknoten (CN3) sowie sende- und empfangsseitige Rechnerknoten (CN1, CN3) und Kommunikations-Applikationen (CA1, CA3) zur Durchführung des Verfahrens. Der Datensatz wird zum Transfer an eine Kommunikations-Applikation (CA1) des ersten Rechnerknotens (CN1) übergeben. Diese Kommunikations-Applikation (CA1) ermittelt die Art des Datensatzes und übermittelt den Datensatz abhängig von der ermittelten Art auf unterschiedliche Weise an eine Kommunikations-Applikation (CA3) des zweiten Rechnerknotens (CN3), die den Datensatz dann im zweiten Rechnerknoten (CN3) bereitstellt. Die Kommunikations-Applikation (CA1) baut eine Punkt zu Punkt Breitbandverbindung zwischen dem ersten Rechnerknoten (CN1) und dem zweiten Rechnerknoten (CN3) für den Datensatz auf und übermittelt den Datensatz über diese Breitbandverbindung, wenn ein Datensatz erster Art ermittelt wird. Die Kommunikations-Applikation (CA1) übermittelt die Daten verbindungslos über ein Internet (KN1), wenn ein Datensatz zweiter Art ermittelt wird. Die Kommunikations-Applikation (CA3) des zweiten Rechnerknotens (CN3) empfängt einen bereitzustellenden Datensatz abhängig von der Art des Datensatz auf unterschiedliche Weise und schaltet für die Bereitstellung transparent zwischen den unterschiedlichen Empfangsweisen um.

## Beschreibung

Die Erfindung betrifft ein Verfahren zum Transfer eines Datensatzes von einem ersten Rechnerknoten zu einem zweiten Rechnerknoten nach dem Oberbegriff von Anspruch 1, einen Rechnerknoten nach dem Oberbegriff von Anspruch 11, einen Rechnerknoten nach dem Oberbegriff von Anspruch 12, eine Kommunikations-Applikation nach dem Oberbegriff von Anspruch 13 und eine Kommunikations-Applikation nach dem Oberbegriff von Anspruch 14.

Für eine effektive Zusammenarbeit eines räumlich verteilten Teams ist es erforderlich, daß ein Datenaustausch zwischen den Rechnern der Teammitglieder möglich ist. Die Erfindung geht nun von einem bekannten Verfahren zum Transfer von Dokumenten zwischen Mitgliedern eines solchen Teams aus.

Die Rechner der Teammitglieder sind mit Web-Client-Applikationen und Web-Server-Applikationen ausgestattet. Diese Applikationen können untereinander über TCP/lP Protokolle (TCP =Transport Control Protocoll, IP = Internet Protocoll) eines Internets jederzeit Daten austauschen, es besteht so praktisch eine permanente Internet Verbindung zwischen diesen Applikation. Um nun Daten, die beispielsweise das Layout eines Dokuments betreffen, an ein anderes Teammitglied zu senden, werden die Daten von der Applikation, die diese Daten verwaltet, an die Web-Client-Applikation des Rechners des sendenden Teammitgliedes geleitet. Diese Web-Client-Applikation übermittelt sodann die Daten über das Internet an die Web-Server-Applikation des Rechners des anderen Teammitglieds. Damit sind diese Daten in diesem Rechner bereitgestellt.

Weiter ist aus JP-A-09233085 ein Datenübertragungsverfahren bekannt, bei dem in Abhängigkeit von der Position des Ziel-Rechners unterschiedliche Kommunikationsmechanismen zum Transfer von Daten eingesetzt werden. Ist der Zielrechner nicht mit dem Netz des Ursprungsrechners verbunden, werden hierbei die Daten mittels des TCP/IP Protokolls übertragen.

Der Erfindung liegt nun die Aufgabe zugrunde, einen effizienten und bedienerfreundlichen Transfer von Daten von einem ersten Rechnerknoten zu einem zweiten Rechnerknoten zu ermöglichen.

Diese Aufgabe wird gelöst durch ein Verfahren zum Transfer eines Datensatzes von einem ersten Rechnerknoten zu einem zweiten Rechnerknoten nach der Lehre von Anspruch 1, einen Rechnerknoten nach der Lehre von Anspruch 1 1, einen Rechnerknoten nach der Lehre von Anspruch 12, eine Kommunikations-Applikation nach der Lehre von Anspruch 13 und eine Kommunikations-Applikation nach der Lehre von Anspruch 14.

Der Erfindung liegt hierbei der Gedanke zugrunde, daß eine Kommunikations-Applikation eines ersten Rechnerknoten für die Übermittlung von Daten an eine Kommunikations-Applikationen eines zweiten Rechners zuständig ist und daß hierbei die Daten in Abhängigkeit von ihrer Art unterschiedlich zwischen diesen Kommunikations-Applikation übertragen werden, wobei eine erste Art von Daten über ein Internet und eine zweite Art von Daten über eine für diese Übermittlung aufgebaute Punkt zu Punkt Breitbandverbindung übertragen wird.

Dies bietet den Vorteil, daß hierdurch die Übertragungszeiten und die Übertragungskosten reduziert werden. Eine teure aber schnelle Breitbandverbindung wird jeweils nur kurzfristig für die Übermittlung einer speziellen Art von Daten aufgebaut. Andere Daten werden über einen kostengünstigeren und langsameren verbindungslosen Kommunikationsmechanismus übertragen. Da dies transparent für den Benutzer der Client-Applikation und anderer Applikationen des Rechnerknotens über eine einheitlichen Applikations-Schnittstelle erfolgt, ist diese Lösung besonders bedienerfreundlich und erfordert keine Änderung bestehender Applikationen.

Vorteilhafte Ausgestaltungen der Erfindung sind den Unteransprüchen zu entnehmen.

Es ist hierbei vor allem vorteilhaft, zwischen Massendaten und Kontrolldaten zu unterscheiden und die Massendaten über die Breitbandverbindung zu übertragen. Dadurch wird eine gleichermaßen schnelle und kostenoptimierte Übermittlung von Kontrolldaten (keine Verbindungsaufbauzeit, langsame Übermittlung einer kleineren Datenmenge) und Massendaten (zusätzliche Verbindungsaufbauzeit, aber schnelle Übermittlung einer großen Datenmenge) erreicht. Die Effizienz kann hierbei weiter durch Zwischenspeichern und Komprimieren der Massendaten erhöht werden.

Im folgenden wird die Erfindung anhand eines Ausführungsbeispiels unter Zuhilfenahme beiliegender Zeichnungen beispielhaft erläutert.
- Fig. 1: zeigt ein Blockschaltbild einer Kommunikationsanordnung mit mehreren erfindungsgemäßen Rechnerknoten.
- Fig. 2: zeigt eine funktionelle Darstellung des Aufbaus zweier Rechnerknoten nach Fig. 1.

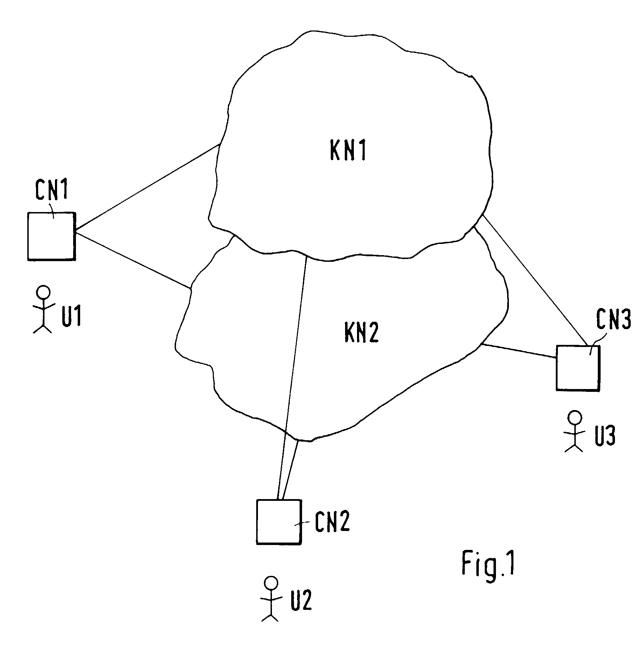

Fig. 1 zeigt drei räumlich verteilte Rechnerknoten CN1 bis CN3 und zwei Kommunikationsnetze KN1 und KN2, über die die Rechnerknoten CN1 bis CN3 miteinander verbunden sind. Den Rechnerknoten CN1 bis CN3 ist jeweils ein Benutzer U1, U2 bzw. U3 zugeordnet.

Die Benutzer U1, U2 und U3 mit ihren Rechnerknoten CN1 bis CN3 bilden ein Team, das zur Erfüllung einer Aufgabe zusammenarbeitet und hierfür ständig unterschiedliche Daten miteinander auszutauschen hat. Die Anzahl der Rechnerknoten und der Benutzer ist hier beispielhaft gewählt. Ein Beispiel hierfür ist die graphische Industrie, wo z.B. Redakteure und Produktioner ständig mit der Zentrale online in Verbindung stehen und von Zeit zu Zeit kurzfristig (Redaktionsschluß) große Datenmengen, z. B. Bilder oder fertige Seiten übertragen.

Die Rechnerknoten CN1 bis CN3 bestehen jeweils aus einem Computer (PC, Workstation, Netzwerk-Computer), der über entsprechende Kommunikationsbaugruppen für den Anschluß an die Kommunikationsnetze KN1 und KN2 versehen ist. Auf der von dem Computer bereitgestellten hard- und softwaremäßigen System plattform setzen mehrere Applikationen auf, die jeweils von einem Applikations-Programm gebildet werden, daß von dem Computer ausgeführt wird.

Das Kommunikationsnetz KN1 ist ein Internet, über das die Rechnerknoten CN1 bis CN3 über einen TCP/ IP Protokoll-Stack Daten austauschen können. Die Daten werden hierbei verbindungslos als Datenpakete aufgrund der Zieladresse im Paketkopf durch das Kommunikationsnetz KN1 zum Ziel-Rechnerknoten geleitet. Physikalisch wird das Kommunikationsnetz KN1 von mehreren unterschiedlichen Subnetzen gebildet: Der Rechnerknoten CN1 ist beispielsweise über eine analoge Verbindung oder eine ISDN-Verbindung (ISDN = Integrated Services Digital Network) eines Fernsprechnetzes mit einem Gateway-Rechner in ein Backbone-Netz verbunden, das seinerseits ein ATM oder DQDB Medium-Access-Protokoll (ATM =Asynchronous Transfer Mode, DQDB = Distributed Queue Dual Bus) verwendet. Der Rechnerknoten CN2 ist beispielsweise über ein ADSL Modem (ADSL = Asymetrical Digital Subscriber Line) und der Rechnerknoten CN3 beispielsweise über ein LAN (LAN =Local Area Network) mit einem Gateway-Rechner in das Backbone-Netz verbunden.

Das Kommunikationsnetz KN2 wird von einem ATM-Netz gebildet, durch das breitbandige Punkt zu Punkt Verbindungen zwischen den Rechnerknoten CN1 bis CN3 aufbaubar sind. Es ist auch möglich, daß es sich bei dem Kommunikationsnetz KN2 um ein andersartiges Netz handelt, das den Aufbau von breitbandigen Punkt zu Punkt Verbindungen erlaubt. Beim Kommunikationsnetz KN2 kann es sich so beispielsweise um ein Fernsprechnetz, durch das ISDN Punkt zu Punkt Verbindungen aufgebaut werden, um ein Netz, das Datex-M oder Frame Relay Verbindungen bereitstellt oder um ein Übertragungsnetz handeln, durch das STM Punkt zu Punkt Verbindungen aufbaubar sind.

Es ist hierbei natürlich auch möglich, daß sich die Kommunikationsnetze KN1 und KN2 aus physikalischer Sicht teilweise überdecken, beispielsweise wenn ein Fernsprechnetz als Zugangsnetz in ein Internet-Backbone-Netz benutzt wird und gleichzeitig dieses Fernsprechnetz für den Aufbau von ISDN Punkt zu Punkt Verbindungen verwendet wird. In diesem Fall wird vorteilhafterweise nur eine Kommunikationsbaugruppe und ein Netzanschluß in dem entsprechenden Rechnerknoten benötigt.

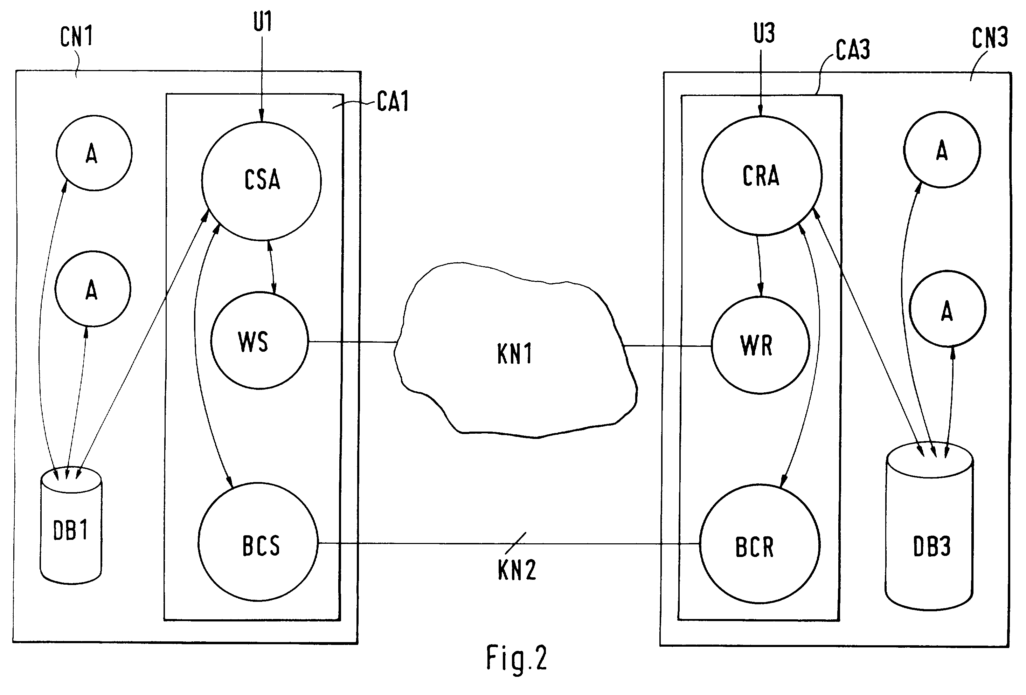

Anhand von Fig. 2 wird nun anhand des Transfers eines Datensatzes vom Rechnerknoten CN1 zum Rechnerknoten CN3 beispielhaft der funktionelle Aufbau der Rechnerknoten CN1 bis CN3 verdeutlicht.

Fig. 2 zeigt die Rechnerknoten CN1 und CN3, die über die Kommunikationsnetze KN1 und KN2 miteinander verbunden sind. Der Rechnerknoten CN1 weist mehrere Applikationen A, eine Datenbank DB1 und eine Kommunikations-Applikation CA1 auf. Der Rechnerknoten CN3 weist mehrere Applikationen A, eine Datenbank DB3 und eine Kommunikations-Applikation CA3 auf.

Die Applikationen A werden jeweils von einem Computerprogramm gebildet, das auf der Systemplattform des Rechnerknotens CN1 bzw. CN3 ausführbar ist und das einen Datentransfer bzw. einen Empfang von Daten zum bzw. vom anderen Rechnerknoten CA3 bzw. CA1 ermöglicht. Beispiele für solche Applikations-Programme sind Textverarbeitungs-, Graphik- oder Dateiverwaltungsprogramme.

Die Datenbanken DB1 und DB3 können auch durch Filesysteme ersetzt werden.

Die Kommunikations-Applikationen CA1 und CA3 werden jeweils von einem Computerprogramm gebildet, das auf der Systemplattform des Rechnerknotens CN1 bzw. CN3 ausführbar ist. Die Kommunikations-Applikationen CA1 und CA3 sind somit natürlich auch unabhängig vom Rechnerknoten CN1 bzw. CN3 existent, beispielsweise in Form eines auf einem Datenträger gespeicherten Computerprogramms. Die im Folgende beschriebene Funktionsweise der Kommunikations-Applikationen CA1 und CA3 bezieht sich auf die Ausführung der Kommunikations-Applikationen durch den Rechnerknoten CN1 bzw. CN3.

Die Kommunikations-Applikation CA1 übermittelt hierbei einen Datensatz, der ihr im Rechnerknoten CN1 zum Transfer in den Rechnerknoten CN3 übergeben wird, transparent für die Applikationen A und den Benutzer U1 an die Kommunikations-Applikationen CA3. Diese stellt sodann den ihr von der Kommunikations-Applikation CA1 übermittelten Datensatz im Rechnerknoten CN3 bereit. Je nach Art des übergebenen Datensatzes wird dieser hierbei auf unterschiedliche Weise von der Kommunikations-Applikation CA1 an die Kommunikations-Applikation CA3 übermittelt.

Eine erste Möglichkeit für die Übergabe eines Datensatzes an die Kommunikations-Applikationen CA1 zum Transfer besteht hierbei darin, daß die Kommunikations-Applikation CA1 eine Benutzerschnittstelle zum Benutzer U1 bereitstellt, über die dieser durch Eingabe von Steuerbefehlen den Transfer von in der Datenbank DB1 abgespeicherten Datensätzen steuern kann. Beim Transfer wird auf einen Steuerbefehl des Benutzers U1 ein durch den Benutzer U1 bezeichneter Datensatz aus der Datenbank DB1 ausgelesen und an einen vom dem Benutzer ausgewählten Rechnerknoten, in diesem Beispiel den Rechnerknoten CN3, durch die Kommunikations-Applikation CA1 übermittelt. Die Benutzerschnittstelle stellt hierzu vorteilhafterweise eine graphische Benutzeroberfläche ähnlich der eines Dateiverwaltungsprogramms, eines E-Mail-Systems oder eines Web-Browsers bereit. Es ist weiter möglich, daß über die Benutzerschnittstelle auch Datensätze zum Transfer ausgewählt werden können, die von Dateien innerhalb des Dateisystems des Rechnerknotens CN1 gebildet werden.

Eine zweite Möglichkeit besteht darin, daß eine Steuernachricht von einer der Applikationen A des Rechnerknotens CN1 an die Kommunikations-Applikationen CA1 gesendet wird, mit der diese aufgefordert wird, den Datensatz an einen der Rechnerknoten CN2 bis CN3, in diesem Beispiel an den Rechnerknoten CN3 zu transferieren. Die Applikation muß hierzu insofern speziell ausgestaltet sein, als sie ihrerseits über ein entsprechendes Interface zur Kommunikations-Applikations CA1 verfügen muß. Der Datensatz selbst kann hierbei Teil dieser Nachricht sein oder mit einer separaten, nachfolgenden Nachricht gesendet werden. Es ist auch möglich, daß die Nachricht einen Zeiger auf die Speicherposition des zu transferierenden Datensatzes enthält und die Kommunikations-Applikationen CA1 den Datensatz beim Transfer von dort ausliest.

Eine erste Möglichkeit zur Bereitstellung eines Datensatzes durch die Kommunikations-Applikation CA3 besteht darin, daß der übermittelte Datensatz in einer Datei oder in einer Datenbank des Rechnerknotens CN3, beispielsweise der Datenbank DB3, abgespeichert wird und anschließend dort von Applikationen A des Rechnerknotens CN3 ausgelesen werden kann. Der Dateibereich, in der der Datensatz abgespeichert wird, wird hierbei vorteilhafterweise von der Kommunikations-Applikation CA3 oder der Kommunikations-Applikation CA1 festgelegt. Die Kommunikations-Applikation CA3 kann weiter eine Benutzerschnittstelle zum Benutzer U3 bereitstellen, über die diesem die von den anderen Rechnerknoten CN1 bis CN3 übermittelten Datensätze gemeldet werden und mittels der dieser durch Eingabe von Steuerbefehlen den weiteren Transfer eines übermittelten Datensatzes innerhalb des Rechnerknotens CN3 oder den weiteren Transfer eines übermittelten Datensatzes zu einem anderen Rechnerknoten steuern kann. Es ist hierbei vorteilhaft, daß die Datensätze bei ihrem Empfang in der Datenbank DB3 abgespeichert werden und von dort dann vom Benutzer U3 weitertransferiert werden.

Eine zweite Möglichkeit zur Bereitstellung eines Datensatzes durch die Kommunikations-Applikation CA3 besteht darin, daß diese den übermittelten Datensatz an eine der Applikationen A des Rechnerknotens CN3 übergibt. Diejenige Applikation A, an die der Datensatz übergeben wird, wird hierbei von derjenigen Applikation bestimmt, die diesen Datensatz an die Kommunikations-Applikation CA1 zum Transfer übergeben hat. Es ist auch möglich, daß die Kommunikations-Applikation CA3 diese Applikation beispielsweise aufgrund des Ursprungs-Rechnerknotens des Datensatzes bestimmt. Zur Übergabe des Datensatz an die bestimmte Applikation wird der Datensatz in einer Nachricht an die Applikation gesendet oder der übermittelte Datensatz wird im Rechnerknoten CN3 abgespeichert und es wird ein Zeiger auf den entsprechenden Speicherbereich an die bestimmte Applikation übergeben.

Alle oben beschriebenen Möglichkeiten zur Übergabe eines Datensatzes und zur Bereitstellung eines Datensatzes können von den Kommunikations-Applikationen CA1 und CA3 natürlich auch parallel angeboten werden.

Die Kommunikations-Applikation CA1 weist drei Programm-Module CSA, WS und BCS auf, bei denen es sich um Programmteile des Computerprogrammes handelt, von dem die Kommunikations-Applikation CA1 gebildet wird. Die Programm-Module CSA, WS und BCS stellen bei ihrer Ausführung innerhalb der Kommunikations-Applikation CA1 folgende Funktionalitäten bereit:

Das Programm-Modul CSA stellt die Zugangsschnittstelle zur Übergabe eines Datensatzes an die Kommunikations-Applikationen CA1 bereit, ermittelt die Art des übergebenen Datensatzes und steuert die Übermittlung des übergebenen Datensatz mittels der Programm-Module WS und BCS.

Das Programm-Modul CSA unterscheidet zwischen zwei Arten von Datensätzen: Einer ersten Art von Datensätzen, die Massendaten enthalten. Solche Datensätze enthalten beispielsweise Bilder, fertige Seiten, Videosequenzen oder ein multimediales Dokument. Einer zweiten Art von Datensätzen, die Kontrolldaten oder Inhalte geringen Umfangs enthalten. Solche Datensätze bestehen beispielsweise aus Steuerinformationen, die zwischen Applikationen ausgetauscht werden, aus Korrekturdaten oder Statusdaten von Dokumenten. Es ist auch möglich, daß das Programm-Modul CSA zwischen anderen Arten von Datensätzen unterscheidet, so beispielsweise zwischen Bilddaten und Textdaten einerseits und Steuerdaten andererseits unterscheidet oder zwischen Bilddaten einerseits und Textdaten und Steuerdaten andererseits unterscheidet.

Eine erste Möglichkeit zur Ermittlung der Art eines Datensatzes besteht darin, daß ein oder mehrere Statusparameter des Datensatzes ausgewertet werden. Handelt es sich bei dem Datensatz beispielsweise um eine Seite, die bereits druckfertig ist (und damit eine große Datenmenge umfaßt), was durch einen bestimmten Statusparameter angezeigt wird, so wird ermittelt, daß es sich hierbei um einen Datensatz erster Art handelt. Die Art des Datensatzes kann sich weiter auch aus einem Dateinamen, der dem Datensatz zugeordnet ist, ergeben. In diesem Fall kann die Art des Datensatzes durch Auswertung des Dateinamen ermittelt werden.

Eine zweite Möglichkeit zur Ermittlung der Art des Datensatzes besteht darin, daß die Größe des Datensatzes bestimmt wird. Übersteigt die Größe des Datensatzes einen festgelegten Schwellwert, so wird ermittelt, des es sich bei diesem Datensatz um einen Datensatz erster Art handelt.

Eine dritte Möglichkeit zur Ermittlung der Art des Datensatz besteht darin, daß die Applikation A, die den Datensatz zum Transfer übergibt, bestimmt wird und eine Zuordnung zwischen Art des Datensatzes und Applikation A festgelegt ist. Aus der bestimmten Applikation wird aufgrund dieser Zuordnung die Art des Datensatzes ermittelt.

Eine dritte Möglichkeit zur Ermittlung der Art des Datensatz besteht darin, daß eine Zuordnung zwischen der Datei oder dem Dateibereich, in der der Datensatz abgespeichert ist, und der Art des Datensatzes festgelegt ist und die Art des Datensatzes mittels dieser Zuordnung ermittelt wird.

Es ist natürlich auch möglich, daß die Art eines übergebenen Datensatzes mittels eines Algorithmus ermittelt wird, der sich aus einer Kombination der oben beschriebenen Möglichkeiten zur Ermittlung der Art des Datensatz ergibt.

Wird ein Datensatz erster Art ermittelt, so wird auf die Funktionen des Programm-Moduls BCS zugegriffen und die Übermittlung des Datensatzes über eine für diesen Datensatz aufgebaute Punkt zu Punkt Breitbandverbindung durch das Kommunikationsnetz KN2 zur Kommunikations-Applikation CA3 veranlaßt. Wird ein Datensatz zweiter Art ermittelt, so wird auf die Funktionen des Programm-Moduls WS zugegriffen und die verbindungslose Übermittlung des Datensatzes durch das Kommunikationsnetz KN1 zur Kommunikations-Applikation CA3 veranlaßt.

Es ist natürlich auch möglich, daß das Programm-Modul CSA zwischen mehr als zwei Arten von Datensätzen unterscheidet und die jeweiligen Datensätze unterschiedlich übermittelt. Beispielsweise könnten für unterschiedliche Arten von Datensätzen Punkt zu Punkt Breitbandverbindungen unterschiedlicher Bandbreite durch unterschiedliche Netze aufgebaut werden. So könnte eine ISDN Verbindung für eine dritte Art von Daten und eine ATM Verbindung für eine vierte Art von Daten aufgebaut werden.

Das Programm Modul WS weist diejenigen Funktionsgruppen eines Internet Browser auf, die die Übermittlung eines Datensatzes über das Kommunikationsnetz KN1 ermöglichen. Wird das Programm-Modul WS von dem Programm-Modul CSA aufgerufen, so ermittelt es die Adresse des Ziel-Rechnerknotens CA3 im Kommunikationsnetz KN1, also die Internet Adresse des Rechnerknotens CA3, und steuert mittels der oben angeführten Funktionsgruppen das Senden eines Nachrichtenpakets mit dem Datensatz über das Kommunikationsnetz KN1 an die ermittelte Ziel-Adresse.

Das Programm Modul BCS weist Funktionsgruppen auf, die für den Aufbau einer Punkt zu Punkt Verbindung durch das Kommunikationsnetz KN2 und das Übermitteln von Daten über eine solche Verbindung benötigt werden (Protokoll-Stacks usw.). Wird das Programm-Modul BCS von dem Programm-Modul CSA aufgerufen, so ermittelt es die Adresse des Ziel-Rechnerknotens CA3 im Kommunikationsnetz KN2, beispielsweise die Rufnummer des Teilnehmeranschlusses, über den der Rechnerknoten CN3 an das Kommunikationsnetz KN2 angebunden ist. Dann steuert es den Aufbau einer Punkt zu Punkt Breitbandverbindung zu dieser Ziel-Adresse und sendet den Datensatz über diese Verbindung an den Rechnerknoten CN3.

Es ist weiter vorteilhaft, daß das Programm-Modul BCS den Datensatz vor der Übermittlung komprimiert und in komprimierten Zustand über die Verbindung an den Rechnerknoten CN3 sendet.

Weiter kann von dem Programm-Modul CSA zur Sende/ Empfangskoordination eine Statuslist unterhalten werden.

Die Kommunikations-Applikation CA3 weist drei Programm-Module CRA, WR und BCR auf, bei denen es sich um Programmteile des Computerprogrammes handelt, von dem die Kommunikations-Applikation CA3 gebildet wird. Die Programm-Module CRA, WR und BCR stellen bei ihrer Ausführung innerhalb der Kommunikations-Applikation CA3 folgende Funktionalitäten bereit:

Die Programm-Module WR und BCR weisen die zu den sendeseitigen Funktionsgruppen der Programm Modulen WS bzw. BCS analogen empfangsseitigen Funktionsgruppen auf. Weiter melden sie jeweils den Empfang von über die Kommunikationsnetze KN1 bzw. KN2 empfangenen Daten an das Programm-Modul CRA.

Das Programm-Modul CRA stellt einen von einem der Rechnerknoten CN1 bis CN2 übermittelten Datensatz im Rechnerknoten CN3 bereit, schaltet transparent für die Bereitstellung zwischen unterschiedlichen Empfangsweisen für solche bereitzustellenden Datensätze um und steuert mittels der Programm-Module WS und BCS den Empfang solcher Datensätze. Werden über die Kommunikationsnetze KN1 oder KN2 von dem Rechnerknoten CN3 Daten empfangen, so wird dies der dem Programm-Modul CSA von den Programm-Modulen WC bzw. BCR gemeldet. Handelt es sich bei den Daten um einen Datensatz, der von einer Kommunikations-Applikation eines der Rechnerknoten CN1 bis CN2 zur Bereitstellung im Rechnerknoten CN3 übermittelt wird, so ermittelt das Programm-Modul CRA, ob dieser Datensatz über das Kommunikationsnetz KN2 oder über das Kommunikationsnetz KN1 übermittelt wird. Diese Ermittlung wird beispielsweise durch die Auswertung einer mitübermittelten Sendekennung der übermittelnden Kommunikations-Applikation realisiert.

Im ersten Fall, also wenn es sich bei dem Datensatz um einen Datensatz erster Art handelt, greift es auf die Funktionen des Programm-Moduls BCR zu und empfängt den Datensatzes über die sendeseitig aufgebaute Punkt zu Punkt Breitbandverbindung von der Kommunikations-Applikation CA1. Im zweiten Fall, also wenn es sich bei dem Datensatz um einen Datensatz zweiter Art handelt, greift es auf die Funktionen des Programm-Moduls WR zu und empfängt den Datensatz verbindungslos über das Kommunikationsnetz KN1 von der Kommunikations-Applikation CA3.

Das Umschalten der Empfangsweise kann hierbei auch mittels des Austausch von Steuerbefehlen zwischen den Programm-Modulen CSA und CRA gesteuert werden.

Anhand von Fig. 2 wurde beispielhaft der Aufbau einer sendeseitigen Kommunikations-Applikation CA1 und einer empfangsseitigen Kommunikations-Applikation CA3 beschrieben. Es ist natürlich vorteilhaft, daß eine Kommunikations-Applikation eines Rechnerknotens sowohl über die sende- als auch über die empfangsseitigen Funktionsgruppen verfügt und somit mit den Programm-Modulen CSA, WS, BCS, CRA, WR und BCR ausgestattet ist. Hierbei ist es vorteihaft, die Programm-Module CSA und CRA, WS und WR sowie BCS und BCR jeweils zu einem Programm-Modul zu verschmelzen.

## Patentansprüche

1. Verfahren zum Transfer eines Datensatzes von einem ersten Rechnerknoten (CN1) zu einem zweiten Rechnerknoten (CN3), wobei der Datensatz zum Transfer an eine Kommunikations-Applikation (CA1) des ersten Rechnerknotens (CN1) übergeben wird, von der der Datensatz dann an eine Kommunikations-Applikation (CA3) des zweiten Rechnerknotens (CN3) übermittelt wird,
**dadurch gekennzeichnet,** daß die Kommunikations-Applikation (CA1) des ersten Rechnerknotens (CN1) die Art des Datensatzes ermittelt und abhängig von der ermittelten Art den Datensatz auf unterschiedliche Weise an die Kommunikations-Applikation (CA3) des zweiten Rechnerknotens (CN3) übermittelt, wobei die Kommunikations-Applikation (CA1) des ersten Rechnerknotens (CN1) eine Punkt zu Punkt Breitbandverbindung zwischen dem ersten Rechnerknoten (CN1) und dem zweiten Rechnerknoten (CN3) für den Datensatz aufbaut und den Datensatz über diese Breitbandverbindung an die Kommunikations-Applikation (CA3) des zweiten Rechnerknotens (CN3) übermittelt, wenn ein Datensatz erster Art ermittelt wird, und die Kommunikations-Applikation (CA1) des ersten Rechnerknotens (CN1) den Datensatz verbindungslos über ein Internet (KN1) an die Kommunikations-Applikation (CA3) des zweiten Rechnerknotens (CN3) übermittelt, wenn ein Datensatz zweiter Art ermittelt wird.

2. Verfahren nach Anspruch 1, dadurch gekennzeichnet, daß bei der Übergabe der Datensatzes von einer Applikation (A) des ersten Rechnerknotens (CN1) an die Kommunikations-Applikation (CA) des ersten Rechnerknoten (CN1) gesendet wird und die Kommunikations-Applikation (CA1) des ersten Rechnerknotens (CN1) den so empfangenen Datensatz an die Kommunikations-Applikation (CA3) des zweiten Rechnerknotens (CN3) übermittelt.

3. Verfahren nach Anspruch 1, dadurch gekennzeichnet, daß bei der Übergabe die Kommunikations-Applikation (CA1) des ersten Rechnerknoten (CN1) auf einen Steuerbefehl den Datensatz, der im ersten Rechnerknoten (CN1) gespeichert ist, ausliest und den ausgelesenen Datensatz an die Kommunikations-Applikation (CA3) des zweiten Rechnerknotens (CN3) übermittelt.

4. Verfahren nach einem der obigen Ansprüche, dadurch gekennzeichnet, daß die Kommunikations-Applikation (CA1) des ersten Rechnerknotens (CN1) einen Datensatz erster Art ermittelt, wenn der Datensatz Massendaten enthält.

5. Verfahren nach einem der obigen Ansprüche, dadurch gekennzeichnet, daß die Kommunikations-Applikation (CA1) des ersten Rechnerknotens (CN1) einen Datensatz zweiter Art ermittelt, wenn der Datensatz Kontrolldaten enthält.

6. Verfahren nach einem der obigen Ansprüche, dadurch gekennzeichnet, daß die Kommunikations-Applikation (CA1) des ersten Rechnerknotens (CN1) die Art des Datensatzes aus einem oder aus mehreren Statusparametern des Datensatzes ermittelt.

7. Verfahren nach einem der obigen Ansprüche, dadurch gekennzeichnet, daß die Kommunikations-Applikation (CA1) des ersten Rechnerknotens (CN1) die Art des Datensatzes aufgrund der Datenmenge des Datensatzes ermittelt.

8. Verfahren nach einem der Ansprüche 1 bis 7, dadurch gekennzeichnet, daß als Punkt zu Punkt Breitbandverbindung eine oder mehrere parallele ISDN Verbindungen aufgebaut werden.

9. Verfahren nach einem der Ansprüche 1 bis 7, dadurch gekennzeichnet, daß als Punkt zu Punkt Breitbandverbindung eine ATM Verbindung aufgebaut wird.

10. Verfahren nach einem der obigen Ansprüche, dadurch gekennzeichnet, daß die Kommunikations-Applikation (CA1) des ersten Rechnerknotens (CN1) einen Datensatz erster Art komprimiert und in komprimierter Form an die Kommunikations-Applikation (CA3) des zweiten Rechnerknotens (CN3) übermittelt.

11. Erster Rechnerknoten (CN1) mit einer Kommunikations-Applikation (CA1), die so ausgestaltet ist, daß sie einen Datensatz, der ihr zum Transfer zu einem zweiten Rechnerknoten (CN3) übergeben wird, an eine Kommunikations-Applikation (CA3) des zweiten Rechnerknotens (CN3) übermittelt,
**dadurch gekennzeichnet,** daß die Kommunikations-Applikation (CA1) des ersten Rechnerknotens (CN1) mit Steuermitteln (CSA), mit ersten Kommunikationsmitteln (BCS) und mit zweiten Kommunikationsmitteln (WS) versehen ist, daß die Steuermittel (CSA) so ausgestaltet sind, daß sie die Art des übergebenen Datensatzes ermitteln und abhängig von der ermittelten Art den Datensatz auf unterschiedliche Weise an die Kommunikations-Applikation (CA3) des zweiten Rechnerknotens (CN3) übermitteln, wobei sie den Datensatz mittels der ersten Kommunikationsmittel (BCS) übermitteln, wenn ein Datensatz erster Art ermittelt wird, und den Datensatz mittels der zweiten Kommunikationsmittel (WS) übermitteln, wenn ein Datensatz zweiter Art ermittelt wird, daß die ersten Kommunikationsmittel (BCS) so ausgestaltet sind, daß sie für den übergebenen Datensatz den Aufbau einer Punkt zu Punkt Breitbandverbindung zwischen dem ersten Rechnerknoten (CN1) und dem zweiten Rechnerknoten (CN3) veranlassen und den Datensatz über diese Breitbandverbindung an die Kommunikations-Applikation (CA3) des zweiten Rechnerknotens (CN3) senden, wenn der Datensatz ein Datensatz erster Art ist, und daß die zweiten Kommunikationsmittel (WS) so ausgestaltet sind, daß sie den übergebenen Datensatz verbindungslos über ein Internet (KN1) an die Kommunikations-Applikation (CA3) des zweiten Rechnerknotens (CN3) senden, wenn der Datensatz ein Datensatz zweiter Art ist.

12. Zweiter Rechnerknoten (CN3) mit einer Kommunikations-Applikation (CA3), die so ausgestaltet ist, daß sie einen Datensatz, der ihr von einer Kommunikations-Applikation (CA1) eines ersten Rechnerknotens (CN1) übermittelt wird, im zweiten Rechnerknoten (CN3) bereitstellt,
**dadurch gekennzeichnet,** daß die Kommunikations-Applikation (CA3) des zweiten Rechnerknotens (CN3) mit Steuermitteln (CRA), ersten Kommunikationsmitteln (BCR) und zweiten Kommunikationsmitteln (WR) versehen ist, daß die Steuermittel (BCR) so ausgestaltet sind, daß sie den bereitzustellenden Datensatz abhängig von der Art des Datensatz auf unterschiedliche Weise von der Kommunikations-Applikation (CA1) des ersten Rechnerknotens (CA1) empfangen und für die Bereitstellung transparent zwischen den unterschiedlichen Empfangsweisen umschalten, wobei sie den Datensatz mittels der ersten Kommunikationsmittel (BCR) empfangen, wenn der empfangene Datensatz ein Datensatz erster Art ist, und den Datensatz mittels der zweiten Kommunikationsmittel (WR) empfangen, wenn der empfangene Datensatz ein Datensatz zweiter Art ist, daß die ersten Kommunikationsmittel (BCR) so ausgestaltet sind, daß sie den bereitzustellenden Datensatz über eine Punkt zu Punkt Breitbandverbindung zwischen dem ersten Rechnerknoten (CN1) und dem zweiten Rechnerknoten (CN3) von der Kommunikations-Applikation (CA1) des ersten Rechnerknotens (CN1) empfangen, wenn der Datensatz ein Datensatz erster Art ist, und daß die zweiten Kommunikationsmittel (WR) so ausgestaltet sind, daß sie den bereitzustellenden Datensatz verbindungslos über ein Internet (KN1) von der Kommunikations-Applikation (CA1) des ersten Rechnerknotens (CN1) empfangen, wenn der Datensatz ein Datensatz zweiter Art ist.

13. Kommunikations-Applikation (CA1) für die Verwendung in einem ersten Rechnerknoten (CN1), die so ausgestaltet ist, daß sie einen Datensatz, der ihr zum Transfer zu einem zweiten Rechnerknoten (CN3) übergeben wird, an eine Kommunikations-Applikation (CN3) des zweiten Rechnerknotens (CN3) übermittelt,
**dadurch gekennzeichnet,** daß die Kommunikations-Applikation (CA1) mit einem ersten Programm-Modul (CSA), mit einem zweiten Programm-Modul (BCS) und mit einem dritten Programm-Modul (WS) versehen ist, daß das erste Programm-Modul (CSA) so ausgestaltet ist, daß es bei seiner Ausführung die Art des übergebenen Datensatzes ermittelt und abhängig von der ermittelten Art den Datensatz auf unterschiedliche Weise an die Kommunikations-Applikation (CA3) des zweiten Rechnerknotens (CN3) übermittelt, wobei es den Datensatz mittels des zweiten Programm-Moduls (BCS) übermittelt, wenn es einen Datensatz erster Art ermittelt und den Datensatz mittels des dritten Programm-Moduls (WS) übermittelt, wenn es einen Datensatz zweiter Art ermittelt, daß das zweiten Programm-Modul (BCS) so ausgestaltet ist, daß es bei seiner Ausführung für den übergebenen Datensatz den Aufbau einer Punkt zu Punkt Breitbandverbindung zwischen dem ersten Rechnerknoten (CN1) und dem zweiten Rechnerknoten (CN3) und das Senden des Datensatz über diese Breitbandverbindung an die Kommunikations-Applikation (CA3) des zweiten Rechnerknotens (CN3) veranlaßt, wenn der Datensatz ein Datensatz erster Art ist, und daß das dritte Programm-Modul (WS) so ausgestaltet ist, daß es bei seiner Ausführung das Senden des übergebenen Datensatz verbindungslos über ein Internet (KN1) an die Kommunikations-Applikation (CA3) des zweiten Rechnerknotens (CA3) veranlaßt, wenn der Datensatz ein Datensatz zweiter Art ist.

14. Kommunikations-Applikation (CA3) für die Verwendung in einem zweiten Rechnerknoten (CA3), die so ausgestaltet ist, daß sie einen Datensatz, der ihr von einer Kommunikations-Applikation (CA1) eines ersten Rechnerknotens (CN1) übermittelt wird, im zweiten Rechnerknoten (CN3) bereitstellt,
**dadurch gekennzeichnet,** daß die Kommunikations-Applikation (CA1) mit einem ersten Programm-Modul (CRA) mit einem zweiten Programm-Modul (BCR) und mit einem dritten Programm-Modul (WR) versehen ist, daß das erste Programm-Modul (CRA) so ausgestaltet ist, daß es bei seiner Ausführung den bereitzustellenden Datensatz abhängig von der Art des Datensatz auf unterschiedliche Weise von der Kommunikations-Applikation (CA1) des ersten Rechnerknotens (CN1) empfängt und für die Bereitstellung transparent zwischen den unterschiedlichen Empfangsweisen umschaltet, wobei es den Datensatz mittels des zweiten Programm-Moduls (BCR) empfängt, wenn der empfangene Datensatz ein Datensatz erster Art ist, und den Datensatz mittels des dritten Programm-Moduls (WR) empfängt, wenn der empfangene Datensatz ein Datensatz zweiter Art ist, daß das zweite Programm-Modul (BCR) so ausgestaltet ist, daß es bei seiner Ausführung den bereitzustellenden Datensatz über eine Punkt zu Punkt Breitbandverbindung zwischen dem ersten Rechnerknoten (CN1) und dem zweiten Rechnerknoten (CN3) von der Kommunikations-Applikation (CA1) des ersten Rechnerknotens (CN1) empfängt, wenn der Datensatz ein Datensatz erster Art ist, und daß das dritte Programm-Modul so ausgestaltet ist, daß es bei seiner Ausführung den bereitzustellenden Datensatz verbindungslos über ein Internet (KN1) von der Kommunikations-Applikation (CA1) des ersten Rechnerknotens (CN1) empfängt, wenn der Datensatz ein Datensatz zweiter Art ist.
